# EUROPÄISCHE PATENTSCHRIFT

(11) **EP 3 098 629 B1**
(45) Veröffentlichungstag und Bekanntmachung des Hinweises auf die Patenterteilung: **05.05.2021**
(21) Anmeldenummer: 16170553.8
(22) Anmeldetag: 20.05.2016
(51) Int. Cl.: G02B 3/00, B60Q 1/00, G02B 27/00, F21S 43/145, F21S 45/10

(54) **VERBUNDANORDNUNG ZUR ABDECKUNG EINER FLÄCHIGEN LEUCHTE**
COMPOSITE ASSEMBLY FOR COVERING A FLAT LUMINAIRE
AGENCEMENT COMPOSITE DESTINE A RECOUVRIR UN ECLAIRAGE PLAT

(30) Priorität: 27.05.2015 AT 504242015
(43) Veröffentlichungstag der Anmeldung: 30.11.2016
(73) Patentinhaber: ZKW Group GmbH, 3250 Wieselburg (AT)
(72) Erfinder: Hartmann, Peter, 3392 Schönbühel-Aggsbach (AT); Hagleitner, Daniel, 1060 Wien (AT)
(74) Vertreter: Patentanwaltskanzlei Matschnig & Forsthuber OG

(56) Entgegenhaltungen:
- JP-A- 2010 256 550
- US-A1- 2009 168 187
- US-A1- 2011 075 256

## Beschreibung

Die Erfindung betrifft eine Verbundanordnung zur Abdeckung einer flächigen Leuchte für Kraftfahrzeuge, insbesondere Signalleuchten oder Scheinwerfer, wobei die Verbundanordnung eine Innenfläche und eine Außenfläche aufweist.

Bei Beleuchtungseinrichtungen für Kraftfahrzeuge wie z.B. Signalleuchten oder Scheinwerfer, ist im Allgemeinen der Lichtquelle und den lichtformenden Elementen wie Linsen und Reflektoren eine Abdeckscheibe vorgelagert. Die Abdeckscheibe schließt das Leuchtengehäuse ab und bietet Schutz vor Umwelteinflüssen. Abdeckscheiben sind zweckmäßigerweise aus einem robusten, insbesondere oberflächenharten und schlagzähen, Material gefertigt. Die Schutzfunktion gegen beispielsweise Steinschläge ist auch dadurch gewährleistet, dass die empfindlichen Leuchtenkomponenten in einem gewissen Abstand hinter der Abdeckscheibe, welche die Aufprallenergie durch Verformung aufnimmt, positioniert, wodurch eine mindestens notwendige Bauraumtiefe des Gehäuses erforderlich ist. Diese Bauraumtiefe ist bei konventionellen Leuchtendesigns und -ausgestaltungen unproblematisch und Teil der optischen Auslegung, jedoch bei Leuchtdesigns mit flächigen Lichtquellen oder Lichtkomponenten wie organischen Leuchtdioden (OLED), Leuchtdioden(LED)-Arrays oder ein flächigen Lichtleitern unerwünscht und folglich ein Hindernis für die erwünschte Reduktion der Bauraumtiefe.

Die US 2011/0039073 A1 offenbart eine Schutzabdeckung zum mechanischen Schutz darunterliegender Gegenstände, die mindestens zwei Materiallagen, eine Materiallage aus Hohlkugel, die andere Materiallage aus plastisch verformbarem Kunststoff, aufweist. Die Zwischenräume zwischen den Kugeln können mit einem Material gefüllt sein, das der Verformung geringeren Widerstand entgegensetzt als die Kugeln selbst.

Die WO 2014/033725 offenbart eine im Bauwesen einsetzbare Schalungsplatte aus Kunststoffverbund als leichte Ausführungsform für den Transport.

Die US 2007/0218261 A1 offenbart einen das Licht steuernden Verbund mit senkrecht durch die Verbundfläche angeordneten transparenten und lichtabsorbierenden Bereichen. Die Grenzflächen des Verbundes liegen folglich in Abstrahlrichtung des Lichts und senkrecht zur Oberfläche der Leuchtenelemente.

Die DE 10 2013 218 850 A1 offenbart eine Leuchtenabdeckung zur Abdeckung von Beleuchtungseinrichtungen in Fahrzeugen, mit einem zumindest teiltransparenten Leuchtbereich, der aus wenigstens einem schlagabsorbierenden Material hergestellt ist oder wenigstens eine Beschichtung aus einem schlagabsorbierenden Material aufweist.

Die US 6,464,382 beschreibt eine Streuplatte mit eingelagerten lichtformenden Körpern mit einem bestimmten Brechungsindex.

Die US 2001/0055215 A1 offenbart eine Leuchtenabdeckung aus Kunststoff mit einer weichen, flexiblen Schicht, die zwischen einem Kunststoffträger und einer äußeren verschleißfesten Schicht angeordnet ist Die US 2011/075256 A1, JP 2010 256550 A und US 2009/168187 A1 offenbaren andere üblichen Verbundanordnungen.

Es ist eine Aufgabe der Erfindung eine Verbundanordnung zur Abdeckung einer flächigen Leuchte für Kraftfahrzeuge genannt, welche bei minimierter Bauraumtiefe einerseits einen zuverlässigen Verschleiß- und Schlagschutz und andererseits die Möglichkeit der Integration optischer funktioneller Elemente bietet.

Diese Aufgabe wird durch eine Verbundanordnung gemäß den Merkmalen des Anspruchs 1 gelöst, nämlich durch eine Verbundanordnung zur Abdeckung einer flächigen Leuchte für Kraftfahrzeuge, mit einer Innenfläche und einer Außenfläche, wobei die Verbundanordnung zumindest eine, eine Krafteinwirkung aufnehmende Lage aufweist, wobei die zumindest eine Lage Strukturen aus einem ersten transparenten polymeren Material mit einem Elastizitätsmodul E > 2000 MPa umfasst, und wobei die zumindest eine Lage ein zweites transparentes Material umfasst, mit dem zwischen den Strukturen befindliche Zwischenräume zumindest teilweise aufgefüllt sind, und wobei die Verbundanordnung erfindungsgemäß dadurch gekennzeichnet ist, dass das zweite transparente Material eine Flüssigkeit mit einer Viskosität von < 10⁶ mPa sec oder eine Füllkörper enthaltende Flüssigkeit mit einer Viskosität von < 10⁶ mPa sec oder ein gelartiges Material ist, und dass sich das zweite transparente Material dilatant verhält.

Dank der Erfindung wird eine in unmittelbarer Nähe der oder direkt an der flächigen Leuchte anliegende Abdeckung bereitgestellt, die einen zuverlässigen Verschleiß- und Schlagschutz bei drastischer Reduktion der Bauraumtiefe mit sich bringt. Die erfindungsgemäße Verbundanordnung kann bei bestimmten Anwendungen von KFZ-Beleuchtungseinrichtungen die ansonsten vorgesehenen Abdeckscheiben ersetzen. Die Verbundanordnung ermöglicht zudem eine Kombination besagter Verschleiß- und Schutzwirkung mit einer Integration optischer funktioneller Elemente, wie z.B. lichtformende Elemente (z.B. lichtverteilende oder streuende Elemente), wodurch vielfältige Gestaltungsmöglichkeiten für flächige Leuchten eröffnet werden.

Erfindungsgemäß ist die Verbundanordnung folglich aus zumindest einer Lage aufgebaut, wobei jede Lage aus einem strukturgebenden, stützenden ersten Material und einem füllenden zweiten Material zusammengesetzt ist, wobei die Zwischenräume zwischen den Strukturen des ersten Materials mit dem zweiten Material zumindest teilweise, vorzugsweise zur Gänze, aufgefüllt werden. Durch die so aufgefüllte Stützstruktur entsteht eine zuverlässige schlagabsorbierende Wirkung, wodurch darunterliegende Leuchtmittel geschützt werden. Das von der Lichtquelle abgestrahlte Licht wird in Ausbreitungsrichtung durch die Verbundanordnung geführt. Beispielsweise kann über die Krümmung der Grenzfläche das durchtretende Licht geformt werden.

Die "Innenfläche der Verbundanordnung" ist jene Fläche der Verbundanordnung, die der flächigen Leuchten zugewandt ist. Entsprechend ist unter der "Außenfläche der Verbundanordnung" jene Fläche der Verbundanordnung zu verstehen, die von der flächigen Leuchte abgewandt ist.

Der Begriff "flächige Leuchte", hierin synonym auch als Leuchte bezeichnet, bezieht sich auf Leuchten mit flächigen Lichtkomponenten, beispielsweise eine organische Leuchtdiode (OLED), ein Leuchtdioden(LED)-Array oder ein flächiger Lichtleiter. Die leuchtende Oberfläche der flächigen Leuchte kann im Wesentlichen planar oder aber auch gekrümmt sein. Derartige Leuchten mit flächigen Lichtkomponenten sind einem Fachmann auf dem Gebiet notorisch bekannt.

Unter den hierin verwendeten Begriffen "transparent" ist zu verstehen, dass die Verbundanordnung für sichtbares Licht passierbar ist. Für die Funktionalität von Kraftfahrzeugleuchten wie Signalleuchten oder Scheinwerfern ist es wesentlich, wenn die, einer Leuchteneinheit in optischer Strahlrichtung nachgeschalteten Abdeckungen eine sehr gute optische Transparenz, d.h. einen hohen Transmissionsgrad, aufweisen. Auf dem Gebiet der Scheinwerfertechnologie gibt es Zielgrößen für die Effizienz für die Lichtemission, deren physikalische Messgröße der Lichtstrom ist. Für Projektionsmodule liegen realistische Werte bei 30-40%, Reflexionsanwendungen erreichen bis zu 60%. Diese Werte ergeben sich aus den Verlusten im System (Reflexionsvermögen der Reflektoroberfläche, Absorptionsverluste in Linse und Abschlussscheibe) und einem geometrischen Nutzungsgrad, der vom verfügbaren Einbauraum, der Abstrahlcharakteristik der Lichtquelle und der Auslegungsstrategie des Lichttechnikers abhängt. Will man ein z.B. ein Scheinwerfer-Projektionsmodul durch eine erfindungsgemäße Verbundanordnung schützen und im Betriebszustand des Scheinwerfers noch akzeptable Effizienz erreichen, so ist der Transmissionsgrad der Abdeckung vorzugsweise größer als 50%.

Der Begriff "Scheinwerfer" umfasst alle Arten von Kraftfahrzeugscheinwerfern, insbesondere Frontscheinwerfer und Heckleuchten. Der Begriff "Signalleuchte" umfasst beispielsweise ein Tagfahrlicht oder ein Begrenzungslicht. Der konstruktive Aufbau bzw. die Lichtverteilung von flächigen Leuchten, Scheinwerfern und Signalleuchten ist hinlänglich bekannt bzw. unterliegt üblicherweise gesetzlichen Anforderungen, die dem Fachmann bekannt sind.

Vorzugsweise ist das erste transparente polymere Material aus der Gruppe bestehend aus Thermoplast und Duroplast ausgewählt. Geeignete Polymere für das erste transparente polymere Material sind zum Beispiel Polyolefin, modifizierte Polyamide (modifizierte PA), Polyacrylate inkl. modifiziertes PMMA (modifiziertes Polymethylmethacrylat), PC (Polycarbonate), Styrol-Co-Polymerisate wie mABS, ASA, SAN, SBS, und PET (Polyethylenterephthalat).

Erfindungsgemäß ist das zweite transparente Material eine Flüssigkeit mit einer Viskosität von < 10⁶ mPa sec oder eine Füllkörper enthaltende Flüssigkeit mit einer Viskosität von < 10⁶ mPa sec oder ein gelartiges Material; derartige Materialien ermöglichen eine gute laterale Verteilung der Aufprallenergie (z.B. aufgrund von Steinschlag), die ohne langen Weg abgeleitet werden kann. Darüber hinaus verhält sich das zweite transparente Material in Abhängigkeit der Aufprallgeschwindigkeit dilatant. Vorzugsweise ist das zweite transparente Material ein Perfluorpolyether. Geeignete Perfluorpolyether sind zum Beispiel Galden® oder Fomblin® (Solvay). Ist das zweite transparente Material eine Flüssigkeit mit einer Viskosität von < 10⁶ mPa sec oder eine Füllkörper enthaltende Flüssigkeit mit einer Viskosität von < 10⁶ mPa sec oder ein gelartiges Material, so weist dieses vorzugsweise eine Dichte von > 1,6g/cm³ auf.

Die Strukturen aus dem ersten transparenten polymeren Material sind zweckmäßigerweise im Spritzgussverfahren, durch Prägen oder durch Tiefziehen einer polymeren Folie hergestellt. Im Anschluss an das Spritzgussverfahren können die Strukturen entweder auf eine Deckschicht oder direkt auf die Lichtaustrittsfläche der flächigen Leuchte, beispielsweise durch Laminieren oder unter Temperatur durch Bestrahlen aufgebracht werden. Alternativ können die Strukturen auch durch Prägen oder Tiefziehen einer polymeren Folie erzeugt werden.

Die Strukturen aus dem ersten polymeren Material sind vorzugsweise aus kuppelförmigen Strukturelementen oder aus Strukturelementen in Form von konkaven oder konvexen Linsen gebildet.

Vorzugsweise weisen die Strukturen bzw. Strukturelemente eine Dimension von 1-25 mm auf. Die Höhe der Strukturelemente senkrecht zur Lage beträgt vorzugsweise 1-5 mm. Die Breite der Strukturelemente parallel zur Lage liegt vorzugsweise in einem Bereich von 1-25 mm, beispielsweise 1, 5, 10, 15 oder 25 mm.

Bei weiteren Varianten können das erste transparente polymere Material und das zweite transparente Material unterschiedliche Brechungsindizes aufweisen. Je nach Form der Strukturen bzw. Strukturelemente und in Abhängigkeit der jeweiligen Brechungsindizes können entsprechende lichtformende Wirkungen (z.B. fokussierende, defokussierend, kollimierend, aufweitend, Farbfehler ausgleichend). Eine nicht erschöpfende Zusammenfassung lichtformender Effekte in Abhängigkeit der Form der linsenförmigen Strukturelemente und der jeweiligen Brechungsindizes ist in der folgenden Tabelle 1 wiedergegeben:

**Tabelle 1:**

| **Linsenform** | **Brechungsindizes** | **Lichtformende Wirkung** |
|---|---|---|
| konvex | n(1) größer n(2) | Fokussierend, kollimierend, Farbfehler ausgleichend |
| konkav | n(1) größer n(2) | Defokussierend, kollimierend, Farbfehler ausgleichend |
| konvex | n(1) kleiner n(2) | Defokussierend, kollimierend, Farbfehler ausgleichend |
| n(1) = Brechungsindex des ersten transparenten polymeren Materials (Strukturen) | | |
| n(2) = Brechungsindex des zweiten transparenten Materials (Füllmaterial) | | |

Handelt es sich bei dem zweiten transparenten Material um eine viskose Flüssigkeit oder ein gelartiges Material, so kann dieses zum Füllen der Zwischenräume zwischen den Strukturen auf die Strukturen aufgerakelt werden.

Das zweite transparente Material (z.B. wenn es sich dabei um ein Polymer oder ein bei Raumtemperatur festes Gel handelt) kann auch durch Schmelzen aufgebracht werden.

Mit Vorteil ist auf der Außenfläche der Verbundanordnung eine äußere Deckschicht aufgebracht. Die äußere Deckschicht ist beispielsweise aus PET (Polyethylenterephthalat), z.B. biaxiales PET bis 100 µm Dicke, PMMA (Polyacrylmethacrylat), PC (Polycarbonat), PVDF (Polyvinylidenfluorid), PA (Polyamid), ABS (Acrylnitril-Butadien-Styrol-Copolymerisat), SAN (Styrol-Acrylnitril), ASA (Acrylester-Styrol-Acrylnitril), PS (Polystyrol) oder Glas gefertigt. Die äußere Deckschicht ist zweckmäßigerweise mit schmutzabweisenden Eigenschaften nach an sich bekannter Art (z.B. Nano-Strukturierung) und/oder ist nach an sich bekannter Art mit einer Hartbeschichtung (z.B. UV-gehärteter Lack oder PVD (*"physical vapour deposition"*)-Schicht auf Silikat-, Zirkonat-, Titanat- oder Aluminat-Basis, DLC (*"diamond-like carbon"*) und dergleichen) versehen.

Bei anderen Varianten ist auf der Innenfläche der Verbundanordnung eine innere Deckschicht aufgebracht, die beispielsweise aus PET, z.B. biaxiales PET bis 100 µm Dicke, PMMA, PC, PVDF PA, ABS, SAN, ASA, Polystyrol oder Glas gefertigt sein kann. Wenn die flächige Lichtkomponente eine OLED ist, dann ist es denkbar, dass die innere Deckschicht weggelassen wird. Im Fall, dass die flächige Lichtkomponenten diskrete Leuchtzentren umfasst (z.B. LED-Array), kann die innere Deckschicht für die Lichteinkopplung optimiert ausgeführt sein; beispielsweise kann sie geformte Kavitäten (z.B. zur Aufnahme von LED Chips) oder Streuzentren (z.B. durch Zugabe von Pigmenten oder sonstige Einschlüsse) aufweisen.

Zum Erhalt einer mehrlagigen Verbundanordnung ist es zweckmäßig, wenn der Aufbau der Verbundanordnung zumindest zwei Lagen umfasst. Zwischen den einzelnen Lagen können mit Vorteil Zwischenschichten angeordnet sein, welche die einzelnen Lagen voneinander trennen und die beispielsweise aus PET, z.B. biaxiales PET bis 100 µm Dicke, PMMA, PC, PVDF, PA, ABS, SAN, ASA, Polystyrol oder Glas gefertigt sind.

Bei vorteilhaften Weiterbildungen sind die Deckschichten (äußere und/oder innere) und/oder die Zwischenschichten in sich mehrlagig aufgebaut. Mit Vorteil können in den mehrlagig aufgebauten Deckschichten und/oder Zwischenschichten optische Elemente (z.B. Mikrostrukturen wie sie beispielsweise in der AT 514 785 A1 beschrieben sind, Streupartikel (micro/nano), Farbstoffe, Pigmente) und/oder strukturverstärkende Elemente (z.B. organische Elemente aus PP (Polypropylen), PE (Polyethylen), PET (Polyethylenterephthalat) oder Polyacrylnitril (PAN); anorganische Elemente aus E/S-Glas, natürlichen oder synthetischen Mineralien oder synthetischen oder natürlichen Lang- oder Kurzfasern) eingebettet sein. Durch die Einbettung strukturverstärkender Elemente werden die Gesamtfestigkeit und die Gesamtdämpfung der Verbundanordnung vorteilhaft erhöht. Eine weitere vorteilhafte Weiterbildung sieht vor, dass für besondere Lichteffekte in den in sich mehrlagig aufgebauten Zwischenschichten seitlich auskoppelnde Lichtwellenleiter eingebunden sind.

Bei vorteilhaften Weiterbildungen der Erfindung sind die jeweiligen Lagen der mehrlagigen Verbundoberfläche unterschiedlich strukturiert und/oder enthalten unterschiedliche Kombinationen der ersten und zweiten Materialien. Dadurch ist es zum Beispiel möglich, ein tiefen-progressives Dämpfungsverhalten der erfindungsgemäßen Verbundanordnung zu realisieren.

Bei anderen Ausführungsformen der Erfindung kann es vorgesehen sein, dass das erste und/oder das zweite transparente Material geschäumt ist, um eine verbesserte Dämpfung, Streuung oder eine Gewichtsersparnis zu erreichen, und/oder mit optischen Elementen ausgewählt aus der Gruppe bestehend aus Streupartikeln, Farbstoffen, Effektpigmenten oder eine Kombination davon versehen ist. Die Streupartikel, Farbstoffe und Effektpigmente können gleichmäßig verteilt sein oder lokal variiert werden, um bestimmte Licht- und Designeffekte zu erhalten. Als Beispiele für Effektpigmente sind Flitter- oder Glitterpigmente, nachleuchtende Pigmente (z.B. phosphoreszierende Pigmente) oder irisierende Pigmente zu nennen.

Ein weiterer Gegenstand der Erfindung betrifft eine flächige Leuchte für ein Kraftfahrzeug umfassend zumindest eine flächige Lichtkomponente und eine erfindungsgemäße Verbundanordnung wie hierin beschrieben.

Mit Vorteil handelt es sich bei der flächigen Lichtkomponente um eine organische Leuchtdiode (OLED), ein Leuchtdioden(LED)-Array oder einen flächigen Lichtleiter. Diese Lichtkomponenten sind einem Fachmann auf dem Gebiet notorisch bekannt.

Wenn die flächige Leuchte ein Leuchtdioden(LED)-Array mit einer Vielzahl an diskreten Leuchtzentren umfasst, dann können die Leuchtzentren zentriert oder außermittig zu den Strukturelementen der strukturierten Schicht angeordnet sein.

Die Erfindung wird im Folgenden anhand von nicht einschränkenden Beispielen näher beschrieben, die in den beiliegenden Zeichnungen dargestellt sind. Die Zeichnungen zeigen:
Fig. 1 die mechanischen Eigenschaften der erfindungsgemäßen Verbundanordnung anhand eines mechanischen Analogons.
Fig. 2 a-d die mechanischen Eigenschaften der Verbundanordnung anhand von zwei beispielhaften Ausführungsformen.
Fig. 3 a-f verschiedene Varianten lichtformender Strukturelemente aus dem ersten transparenten polymeren Material.
Fig. 4 a-c verschiedene Varianten des Aufbaus (einlagig und mehrlagig) der erfindungsgemäßen Verbundanordnung, und
Fig. 5 ein Verfahren zur Herstellung einer erfindungsgemäßen Verbundanordnung.

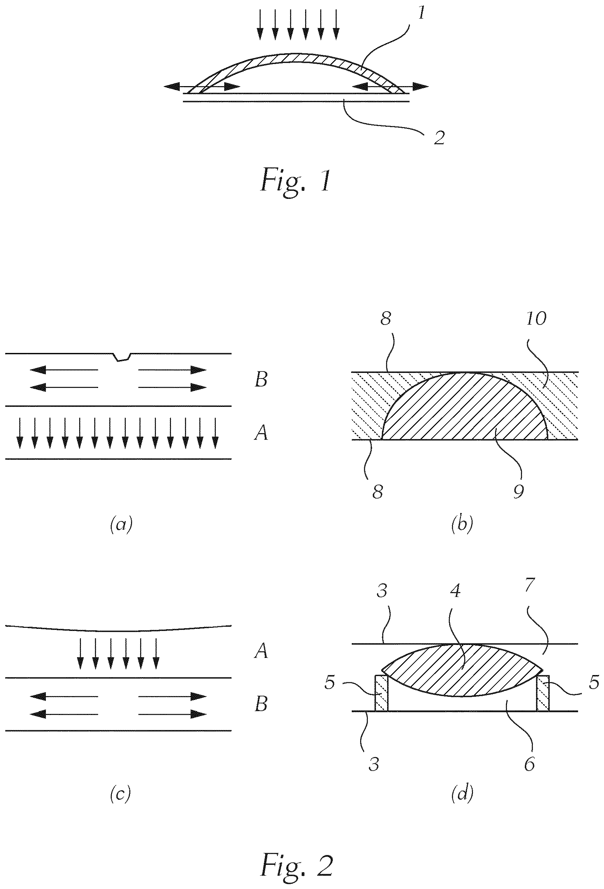

Fig. 1 zeigt die mechanischen Eigenschaften der erfindungsgemäßen Verbundanordnung anhand eines mechanischen Analogons. Das federnde Element 1 nimmt die Krafteinwirkung senkrecht zur Ebene 2 auf (durch senkrechte Pfeile symbolisiert). Das federnde Element 1 ist dabei nicht starr mit der Ebene 2 verbunden und kann daher zur Seite ausweichen (durch horizontale Pfeile symbolisiert). Eine von außen auf die Verbundanordnung wirkende Kraft (z.B. ein Aufprall durch Steinschlag) wird folglich lateral abgeleitet.

In den Fig. 2 a-d sind die mechanischen Eigenschaften der Verbundanordnung bei einer Krafteinwirkung (z.B. ein Aufprall durch Steinschlag) anhand von zwei beispielhaften Ausführungsformen (Fig. 2 a und 2 b bzw. Fig. 2 c und 2 d) dargestellt. Fig. 2 a illustriert den Kräfteverlauf in einer in Fig. 2 b gezeigten einlagigen Verbundanordnung gemäß einer ersten beispielhaften Ausführungsform. Fig. 2 c illustriert den Kräfteverlauf in einer in Fig. 2 d gezeigten einlagigen Verbundanordnung gemäß einer zweiten beispielhaften Ausführungsform. Die in den Fig. 2 a und 2 c schematisch durch senkrechte Pfeile illustrierte Kraftaufnahme A ist jene, die senkrecht zur Ebene der Lage erfolgt. Die Kraftaufnahme A dient bevorzugt zur Absorption der Energie und ist dazu ausgelegt, schnellere Geschosse stärker zu bremsen, bei geschwindigkeitsabhängiger Betrachtung. Bei der Kraftaufnahme B, die im Wesentlichen parallel zur Ebene der Lage verläuft und in Fig. 2 a und 2 c durch waagrechte Pfeile illustriert ist, wird die Energie des auftreffenden Geschosses (z.B. eines Steines) lateral verteilt.

Die in Fig. 2 b gezeigte Verbundanordnung (dem in Fig. 2 a illustrierten Kräfteverlauf entsprechend) weist zwei Deckschichten 8 auf, zwischen welchen im Wesentlichen plan-konvexe bzw. kuppelförmige Strukturelemente 9 angeordnet sind (in Fig. 2 b ist nur ein Strukturelement 9 dargestellt). Die Strukturelemente 9 sind aus einem Material mit einem hohen E-Modul (E > 2000 MPa) hergestellt. Die Bereiche 10 rund um das Strukturelement 9 sind beispielsweise mit einer viskosen Flüssigkeit, die sich in Abhängigkeit von der Aufprallgeschwindigkeit dilatant verhält, aufgefüllt. Die Strukturelemente 9 übernehmen dabei die Kraftaufnahme A, wohingegen die mit viskoser Flüssigkeit aufgefüllten Bereiche 10 für die Kraftaufnahme B verantwortlich sind.

Die in Fig. 2 d gezeigte Verbundanordnung (dem in Fig. 2 c illustrierten Kräfteverlauf entsprechend) umfasst zwei Deckschichten 3, zwischen welchen linsenförmige Strukturelemente 4, die auf Auflageelementen 5 gelagert sind, angeordnet sind (in Fig. 2 b ist nur ein Strukturelement 4 bzw. nur ein Auflageelement 5 dargestellt). Die linsenförmigen Strukturelemente 4 sind aus einem Material mit einem hohen E-Modul (E > 2000 MPa) hergestellt. Die Auflageelemente 5 sind beispielsweise hohlzylinderförmig und vorzugsweise aus einem weicheren polymeren Material mit einem Elastizitätsmodul E < 1000 MPa gefertigt. Der Bereich 6 unterhalb des Strukturelements 4, kann zum Beispiel mit Luft aufgefüllt sein. Der Bereich 7 außerhalb des Strukturelements 4 kann beispielsweise mit einer viskosen Flüssigkeit oder ebenfalls mit Luft aufgefüllt sein. Bezug nehmend auf den in Fig. 2 c illustrierten Kräfteverlauf, übernehmen die linsenförmigen Strukturelemente 4 die Kraftaufnahme A. Die Kraftaufnahme B erfolgt durch die Auflageelemente 5, die den Strukturelementen 4 bei einem Aufprall ein seitliches Ausweichen gestatten, sowie durch die mit Luft bzw. mit viskoser Flüssigkeit befüllten Bereiche 6, 7.

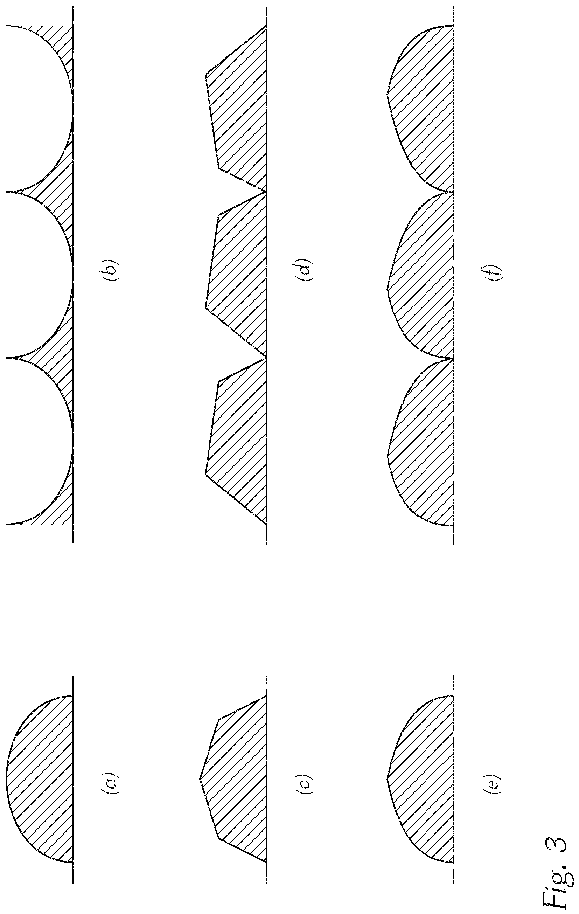

Fig. 3 zeigt sammelnde (Fig. 3a) und streuende (Fig. 3b) Licht-formende Strukturelemente. Fig. 3c und Fig. 3d zeigen Strukturelemente mit Kanten am Übergang zwischen ebenen Oberflächenabschnitten, wobei die Kanten symmetrisch (Fig. 3c) oder unsymmetrisch (Fig. 3d) positioniert sein können. Fig. 3e und Fig. 3f zeigen Strukturelemente mit Kanten am Übergang zwischen gekrümmten Oberflächenabschnitten, wobei die Kanten symmetrisch (Fig. 3e) oder unsymmetrisch (Fig. 3f) positioniert sein können.

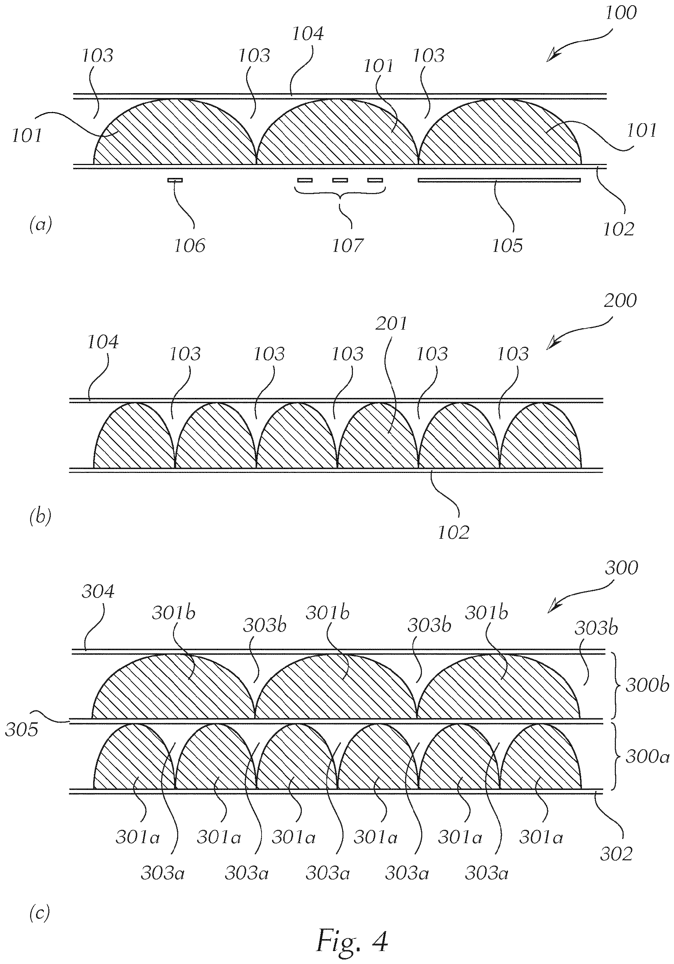

Fig. 4 zeigt schematische Darstellungen verschiedene Varianten des Aufbaus (einlagig und mehrlagig) der erfindungsgemäßen Verbundanordnung.

In Fig. 4a ist ein Beispiel für einen einlagigen Aufbau einer erfindungsgemäßen Verbundanordnung 100 dargestellt. Der Aufbau umfasst sammelnde lichtformende Strukturelemente 101, die im Wesentlichen eine plan-konvexe bzw. kuppelförmige Form haben. Die Strukturelemente 101 sind aus einem ersten transparenten polymeren Material mit einem Elastizitätsmodul E > 2000 MPa, beispielsweise aus Polymethylmethacrylat (PMMA), hergestellt und auf einer inneren, einer flächigen Lichtkomponente zugewandten Deckschicht 102 angeordnet. Die Deckschicht 102 besteht beispielsweise aus einer Folie aus biaxial orientiertem Polyethylenterephthalat (PET). Die Zwischenräume 103 zwischen den Strukturelementen 101 sind mit einem zweiten transparenten Material aufgefüllt, hier mit einem Perfluorpolyether wie Galden® oder Fomblin® (Solvay). Nach außen hin ist die Verbundanordnung 100 durch eine äußere Deckschicht 104 abgeschlossen, die ebenfalls aus PET hergestellt sein kann. Die äußere Deckschicht 104 kann zudem mit schmutzabweisenden Eigenschaften nach an sich bekannter Art (z.B. Nano-Strukturierung) und/oder ist nach an sich bekannter Art mit einer Hartbeschichtung (z.B. UV-gehärteter Lack oder PVD-Schicht auf Silikat-, Zirkonat-, Titanat- oder Aluminat-Basis, DLC und dergleichen) versehen sein. Die Höhe der Strukturelemente 101 senkrecht zur Lage beträgt ca. 5 mm. Die Breite der Strukturelemente 101 parallel zur Lage beträgt ca. 15 mm.

In Fig. 4a sind zudem beispielhaft die Leuchtschichten der flächigen Leuchtenkomponenten, die mit der Verbundanordnung abgedeckt werden, schematisch dargestellt. Im Fall einer OLED ist die Leuchtschicht 105 homogen ausgebildet. Die Leuchtschicht einer LED weist diskrete Leuchtzentren auf, die entweder zentriert (Leuchtschicht 106) oder außermittig zu den Strukturelementen 101 der Verbundanordnung 100 angeordnet sein können.

Fig. 4b zeigt eine Verbundanordnung 200, die im Wesentlichen gleich aufgebaut ist, wie die Verbundanordnung 100 aus Fig. 4b, mit dem Unterschied, dass die Dimension der kuppelförmigen Strukturelemente 201 kleiner gewählt ist. Die Höhe der Strukturelemente 201 senkrecht zur Lage beträgt ca. 5 mm. Die Breite der Strukturelemente 201 parallel zur Lage beträgt ca. 5 mm.

In Fig. 4c ist ein Beispiel für einen zweilagigen Aufbau einer erfindungsgemäßen Verbundanordnung 300 dargestellt. Der Aufbau umfasst insgesamt zwei Lagen, eine innere Lage 300a und eine äußere Lage 300b, wobei jede Lage 300a, 300b sammelnde lichtformende Strukturelemente 301a, 301b aufweist. Die Strukturelemente 301a, 301b haben im Wesentlichen eine plan-konvexe bzw. kuppelförmige Form und unterscheiden sich in ihrer Dimension. Die Höhe der Strukturelemente 301a senkrecht zur Lage beträgt ca. 5 mm. Die Breite der Strukturelemente 301a parallel zur Lage beträgt ca. 5 mm. Die Höhe der Strukturelemente 301b senkrecht zur Lage beträgt ca. 5 mm. Die Breite der Strukturelemente 301b parallel zur Lage beträgt ca. 15 mm. Die Lagen 300a, 300b sind von einer inneren, einer flächigen Lichtkomponente zugewandten Deckschicht 302 und einer äußeren Deckschicht 304 begrenzt. Zusätzlich sind die Lagen 300a, 300b durch eine Zwischenschicht 305 voneinander getrennt. Die Deckschichten 302, 304 und die Zwischenschicht 305 bestehen beispielsweise aus einer Folie aus biaxial orientiertem Polyethylenterephthalat (PET). Die Zwischenräume 303a bzw. 303b zwischen den Strukturelementen 301a bzw. 301b sind mit einem zweiten transparenten Material aufgefüllt. Die äußere Deckschicht 304 kann zudem mit schmutzabweisenden Eigenschaften nach an sich bekannter Art (z.B. Nano-Strukturierung) und/oder ist nach an sich bekannter Art mit einer Hartbeschichtung (z.B. UV-gehärteter Lack oder PVD-Schicht auf Silikat-, Zirkonat-, Titanat- oder Aluminat-Basis, DLC und dergleichen) versehen sein. Bei einer Untervariante sind die Materialien für die Strukturelemente 301a, 301b bzw. die füllenden Materialien für die Zwischenräume 303a, 303b gleich. Um ein tiefen-progressives Dämpfungsverhalten zu realisieren, kann der mehrlagige Verbund 300 jedoch unterschiedliche Materialkombinationen aufweisen. Zwei repräsentative Beispiele für solche Materialkombinationen für die Lagen 300a, 300b sind in der Tabelle 2 dargestellt:

**Tabelle 2:**

| | **Material 1** (für Strukturelemente 301a bzw. 301b) | **Material 2** (zum Füllen der Zwischenräume 303a bzw.303b | **Eigenschaften** |
|---|---|---|---|
| **Beispiel 1 (nicht gemäß der Erfindung)** | | | |
| Lage 300b (außen) | TPE-U | Luft | "soft-touch", dämpfend, verteilend |
| Lage 300a (innen) | PMMA | Silikon | Steif abfedernd, Energie aufnehmend, Lichtformend |

| **Beispiel 2** | | | |
|---|---|---|---|
| Lage 300b (außen) | PC/ Hartbeschichtet | Luft | Steif, hart, Aufprall ablenkend, kratzfest |
| Lage 300a (innen) | TPE-O | Luft, Perfluorpolyether | Kraft verteilend, Auslenkung der äußeren Lage 300b abfedernd |

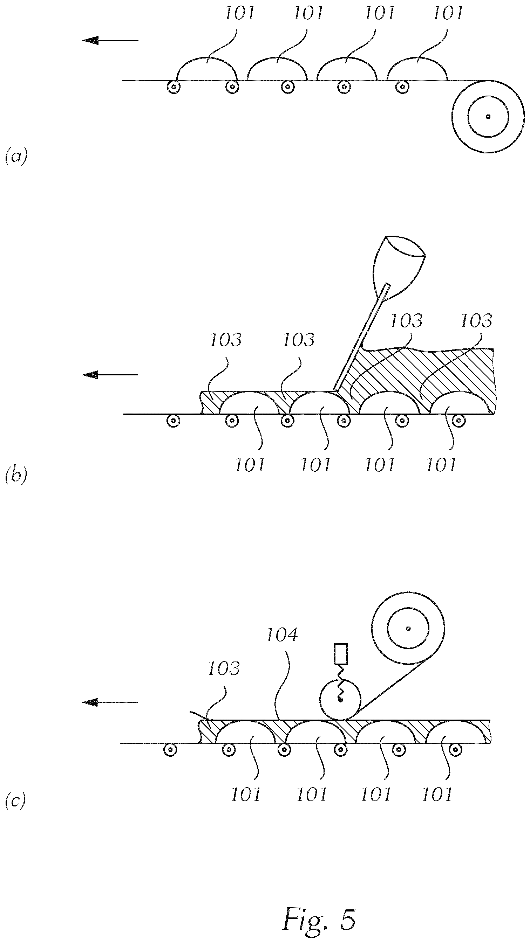

In Fig. 5 ist das Verfahren zur Herstellung einer erfindungsgemäßen Verbundanordnung, hier am Beispiel der Verbundanordnung 100 aus Fig. 1, schematisch dargestellt. Die zuvor im Spritzgussverfahren nach an sich bekannter Art hergestellten Strukturelemente 101 aus dem ersten transparenten polymeren Material (z.B. PMMA mit einem Elastizitätsmodul E > 2000 MPa) werden auf die innere Deckschicht 102 beispielsweise durch Laminieren oder unter Temperatur durch Bestrahlen aufgebracht (Fig. 5a). Im Fall einer OLED können die Strukturelemente 101 auch direkt auf die Leuchtschicht der OLED aufgebracht werden (nicht gezeigt). Anschließend werden die Zwischenräume 103 zwischen den Strukturelementen 101 durch Aufrakeln des zweiten transparenten Materials (Perfluorpolyether wie Galden® oder Fomblin® (Solvay) aufgefüllt (Fig. 5b). Alternativ ist es auch möglich, das zweite transparente Material, zum Beispiel wenn es sich um ein Polymer oder um ein bei Raumtemperatur festes Gel handelt, durch Schmelzen aufzubringen. Anschließend wird zum Erhalt der Verbundanordnung noch die äußere Deckschicht 104 aufgebracht (Fig. 5c).

## Patentansprüche

1. Verbundanordnung (100, 200, 300) zur Abdeckung einer flächigen Leuchte für Kraftfahrzeuge, mit einer Innenfläche und einer Außenfläche, wobei die Verbundanordnung (100, 200, 300) zumindest eine eine Krafteinwirkung aufnehmende Lage aufweist, wobei die zumindest eine Lage Strukturen (4, 9, 101, 201, 301a, 301b) aus einem ersten transparenten polymeren Material mit einem Elastizitätsmodul E > 2000 MPa umfasst, und wobei die zumindest eine Lage ein zweites transparentes Material umfasst, mit dem zwischen den Strukturen (4, 9, 101, 201, 301a, 301b) befindliche Zwischenräume (6, 7, 10, 103, 303a, 303b) zumindest teilweise aufgefüllt sind,
**dadurch gekennzeichnet, dass**
das zweite transparente Material eine Flüssigkeit mit einer Viskosität von < 10⁶ mPa sec oder eine Füllkörper enthaltende Flüssigkeit mit einer Viskosität von < 10⁶ mPa sec oder ein gelartiges Material ist, und dass sich das zweite transparente Material dilatant verhält.

2. Verbundanordnung nach Anspruch 1, **dadurch gekennzeichnet, dass** das erste transparente Material aus der Gruppe bestehend aus Thermoplast und Duroplast ausgewählt ist.

3. Verbundanordnung nach Anspruch 1 oder 2, **dadurch gekennzeichnet, dass** das zweite polymere Material ein Perfluorpolyether ist.

4. Verbundanordnung nach einem der Ansprüche 1 bis 3, **dadurch gekennzeichnet, dass** das zweite transparente Material eine Dichte von > 1,6 g/cm³ aufweist.

5. Verbundanordnung nach einem der Ansprüche 1 bis 4, **dadurch gekennzeichnet, dass** die Strukturen (4, 9, 101, 201, 301a, 301b) aus kuppelförmigen Strukturelementen oder aus Strukturelementen in Form von konkaven oder konvexen Linsen gebildet sind.

6. Verbundanordnung nach einem der Ansprüche 1 bis 5, **dadurch gekennzeichnet, dass** auf der Außenfläche der Verbundanordnung eine äußere Deckschicht (8, 104, 304) und dass auf der Innenfläche der Verbundanordnung eine innere Deckschicht (3, 8, 102, 302) aufgebracht ist.

7. Verbundanordnung nach einem der Ansprüche 1 bis 6, **dadurch gekennzeichnet, dass** das erste und das zweite Material unterschiedliche Brechungsindizes aufweisen.

8. Verbundanordnung nach einem der Ansprüche 1 bis 7, **dadurch gekennzeichnet, dass** zum Erhalt einer mehrlagigen Verbundanordnung (300), der Aufbau der Verbundanordnung zumindest zwei Lagen (300a, 300b) umfasst.

9. Verbundanordnung nach Anspruch 8, **dadurch gekennzeichnet, dass** zwischen den einzelnen Lagen (300a, 300b) Zwischenschichten (305) angeordnet sind.

10. Verbundanordnung nach Anspruch 6 oder 9, **dadurch gekennzeichnet, dass** die Deckschichten und/oder Zwischenschichten mehrlagig aufgebaut sind.

11. Verbundanordnung nach Anspruch 10, **dadurch gekennzeichnet, dass** in den Deckschichten und/oder Zwischenschichten optische Elemente und/oder strukturverstärkende Elemente eingebettet sind.

12. Verbundanordnung nach Anspruch 11, **dadurch gekennzeichnet, dass** das optische Element ein seitlich auskoppelnder Lichtwellenleiter ist.

13. Verbundanordnung nach einem der Ansprüche 1 bis 12, **dadurch gekennzeichnet, dass** das erste und/oder das zweite transparente Material geschäumt ist und/oder mit optischen Elementen ausgewählt aus der Gruppe bestehend aus Streupartikeln, Farbstoffen, Effektpigmenten oder eine Kombination davon versehen ist.

14. Verbundanordnung nach einem der Ansprüche 1 bis 13, **dadurch gekennzeichnet, dass** die Strukturen eine Dimension von 1-25 mm haben.

15. Flächige Leuchte für ein Kraftfahrzeug umfassend zumindest eine flächige Lichtkomponente und eine Verbundanordnung nach einem der Ansprüche 1 bis 14.

16. Flächige Leuchte nach Anspruch 15, **dadurch gekennzeichnet, dass** die flächige Lichtkomponente eine organische Leuchtdiode (OLED), ein Leuchtdioden(LED)-Array oder ein flächiger Lichtleiter ist.

17. Flächige Leuchte nach Anspruch 15 oder 16, **dadurch gekennzeichnet, dass** sie ein Leuchtdioden(LED)-Array mit einer Vielzahl an diskreten Leuchtzentren umfasst, wobei die Leuchtzentren zentriert oder außermittig zu den Strukturelementen der strukturierten Schicht angeordnet sind.

18. Verwendung einer Verbundanordnung nach einem der Ansprüche 1 bis 14 als Verschleiß- und Schlagschutz zur Abdeckung einer flächigen Leuchte für Kraftfahrzeuge.

## Claims

1. Composite arrangement (100, 200, 300) for covering a flat light for motor vehicles, having an inner surface and an outer surface, the composite arrangement (100, 200, 300) having at least one layer which absorbs a force action, the at least one layer comprising structures (4, 9, 101, 201, 301a, 301b) made of a first transparent polymeric material having a modulus of elasticity E > 2000 MPa, and wherein the at least one layer comprises a second transparent material with which interstices (6, 7, 10, 103, 303a, 303b) located between the structures (4, 9, 101, 201, 301a, 301b) are at least partially filled,
**characterised in that**
the second transparent material is a liquid with a viscosity of < 10⁶ mPa sec or a liquid containing fillers with a viscosity of < 10⁶ mPa sec or a gel-like material, and that the second transparent material behaves dilatantly.

2. Composite arrangement according to claim 1, **characterised in that** the first transparent material is selected from the group consisting of thermoplastic and thermoset.

3. Composite arrangement according to claim 1 or 2, **characterised in that** the second polymeric material is a perfluoropolyether.

4. Composite arrangement according to any one of claims 1 to 3, **characterised in that** the second transparent material has a density of > 1.6 g/cm³.

5. Composite arrangement according to any one of claims 1 to 4, **characterised in that** the structures (4, 9, 101, 201, 301a, 301b) are formed of dome-shaped structural elements or of structural elements in the form of concave or convex lenses.

6. Composite arrangement according to any one of claims 1 to 5, **characterised in that** an outer cover layer (8, 104, 304) is applied to the outer surface of the composite arrangement and that an inner cover layer (3, 8, 102, 302) is applied to the inner surface of the composite arrangement.

7. Composite arrangement according to any one of claims 1 to 6, **characterised in that** the first and second materials have different refractive indices.

8. Composite arrangement according to any one of claims 1 to 7, **characterised in that**, to obtain a multilayer composite assembly (300), the structure of the composite arrangement comprises at least two layers (300a, 300b).

9. Composite arrangement according to claim 8, **characterised in that** intermediate layers (305) are arranged between the individual layers (300a, 300b).

10. Composite arrangement according to claim 6 or 9, **characterised in that** the cover layers and/or intermediate layers are constructed in multiple layers.

11. Composite arrangement according to claim 10, **characterised in that** optical elements and/or structure-reinforcing elements are embedded in the cover layers and/or intermediate layers.

12. Composite arrangement according to claim 11, **characterised in that** the optical element is a laterally decoupling optical waveguide.

13. Composite arrangement according to any one of claims 1 to 12, **characterised in that** the first and/or the second transparent material is foamed and/or provided with optical elements selected from the group consisting of scattering particles, dyes, effect pigments or a combination thereof.

14. Composite arrangement according to any one of claims 1 to 13, **characterised in that** the structures have a dimension of 1 - 25 mm.

15. Flat light for a motor vehicle comprising at least one flat light component and a composite arrangement according to any one of claims 1 to 14.

16. Flat light according to claim 15, **characterised in that** the flat light component is an organic light-emitting diode (OLED), a light-emitting diode (LED) array or a flat light guide.

17. Flat light according to claim 15 or 16, **characterised in that** it comprises a light emitting diode (LED) array having a plurality of discrete light centres, the light centres being centred or off-centre with respect to the structural elements of the structured layer.

18. Use of a composite arrangement according to any one of claims 1 to 14 as wear and impact protection for covering a flat light for motor vehicles.

## Revendications

1. Agencement composite (100, 200, 300) pour recouvrir un luminaire plan pour véhicules automobiles, ayant une surface intérieure et une surface extérieure, l'agencement composite (100, 200, 300) ayant au moins une couche qui absorbe une action de force, la au moins une couche comprenant des structures (4, 9,101, 201, 301a, 301b) en un premier matériau polymère transparent ayant un module d'élasticité E > 2000 MPa, et dans laquelle la au moins une couche comprend un second matériau transparent avec lequel les interstices (6, 7, 10, 103, 303a, 303b) situés entre les structures (4, 9, 101, 201, 301a, 301b) sont au moins partiellement remplis,
**caractérisé en ce que**
le second matériau transparent est un liquide ayant une viscosité de < 10⁶ mPa sec ou un liquide conditionné ayant une viscosité de < 10⁶ mPa sec ou un matériau de type gel, et **en ce que** le second matériau transparent se comporte de manière dilatée.

2. Agencement composite selon la revendication 1, **caractérisé en ce que** le premier matériau transparent est choisi dans le groupe constitué par les thermoplastiques et les thermodurcissables.

3. Agencement composite selon la revendication 1 ou 2, **caractérisé en ce que** le second matériau polymère est un perfluoropolyéther.

4. Agencement composite selon l'une des revendications 1 à 3, **caractérisé en ce que** le second matériau transparent a une densité > 1,6 g/cm³.

5. Agencement composite selon l'une quelconque des revendications 1 à 4, **caractérisé en ce que** les structures (4, 9, 101, 201, 301a, 301b) sont formées d'éléments structurels en forme de dôme ou d'éléments structurels en forme de lentilles concaves ou convexes.

6. Agencement composite selon l'une quelconque des revendications 1 à 5, **caractérisé en ce qu'**une couche de couverture extérieure (8, 104, 304) est appliquée sur la surface extérieure de l'agencement composite et qu'une couche de couverture intérieure (3, 8, 102, 302) est appliquée sur la surface intérieure de l'agencement composite.

7. Agencement composite selon l'une des revendications 1 à 6, **caractérisé en ce que** le premier et le second matériaux ont des indices de réfraction différents.

8. Agencement composite selon l'une quelconque des revendications 1 à 7, **caractérisé en ce que** pour obtenir un agencement composite multicouche (300), la structure de l'agencement composite comprend au moins deux couches (300a, 300b).

9. Agencement composite selon la revendication 8, **caractérisé en ce que** des couches intermédiaires (305) sont disposées entre les couches individuelles (300a, 300b).

10. Agencement composite selon la revendication 6 ou 9, **caractérisé en ce que** les couches extérieures et/ou les couches intermédiaires sont construites en couches multiples.

11. Agencement composite selon la revendication 10, **caractérisé en ce que** des éléments optiques et/ou des éléments de renforcement de la structure sont incorporés dans les couches de couverture et/ou les couches intermédiaires.

12. Agencement composite selon la revendication 11, **caractérisé en ce que** l'élément optique est un guide d'onde optique à découplage latéral.

13. Agencement composite selon l'une quelconque des revendications 1 à 12, **caractérisé en ce que** le premier et/ou le second matériau transparent est moussé et/ou est pourvu d'éléments optiques choisis dans le groupe constitué par les particules de diffusion, les colorants, les pigments à effet ou une combinaison de ceux-ci.

14. Agencement composite selon l'une des revendications 1 à 13, **caractérisé en ce que** les structures ont une dimension de 1 - 25 mm.

15. Luminaire plan pour un véhicule automobile comprenant au moins un élément de luminaire plan et un agencement composite selon l'une des revendications 1 à 14.

16. Luminaire plan selon la revendication 15, **caractérisée en ce que** le composant de luminaire plane est une diode électroluminescente organique (OLED), un réseau de diodes électroluminescentes (LED) ou un guide de luminaire plan.

17. Luminaire plan selon la revendication 15 ou 16, **caractérisé en ce qu'**il comprend un réseau de diodes électroluminescentes (DEL) ayant une pluralité de centres lumineux discrets, lesdits centres lumineux étant centrés ou décentrés par rapport aux éléments structurels de la couche structurée.

18. Utilisation d'un dispositif composite selon l'une des revendications 1 à 14 comme protection contre l'usure et les chocs pour recouvrir un luminaire plan pour véhicules automobiles.
